# EUROPÄISCHE PATENTSCHRIFT

(11) **EP 0 776 258 B1**
(45) Veröffentlichungstag und Bekanntmachung des Hinweises auf die Patenterteilung: **31.10.2001**
(21) Anmeldenummer: 95913052.7
(22) Anmeldetag: 25.03.1995
(51) Int. Cl.: B23B 5/28

(54) **PROFILIERUNGSWERKZEUG UND VERFAHREN ZUR SPANGEBENDEN RADSATZBEARBEITUNG**
RAIL-WHEEL MACHINING TOOL AND METHOD OF MACHINING SETS OF RAIL WHEELS
OUTIL DE PROFILAGE ET PROCEDE D'USINAGE D'ESSIEUX MONTES PAR ENLEVEMENT DE MATIERE

(30) Priorität: 29.03.1994 DE 9405317 U
(43) Veröffentlichungstag der Anmeldung: 04.06.1997
(73) Patentinhaber: NILES-SIMMONS Industrieanlagen GmbH, D-09117 Chemnitz (DE); Naumann, Hans J., Albany, NY 12204 (US)
(72) Erfinder: NAUMANN, Hans, J., D - 41849 Wassenberg (DE); ROSS, Hermann, D-90427 Nürnberg (DE); ROBOTTA, Reinhard, D-09306 Erlau (DE); LUTZE, Hans, D-09116 Chemnitz (DE)
(74) Vertreter: Grättinger & Partner (GbR)
(86) Internationale Anmeldenummer: DE9500405
(87) Internationale Veröffentlichungsnummer: WO9526246

(56) Entgegenhaltungen:
- EP-A- 0 095 945
- DE-A- 4 041 539
- US-A- 3 540 103

## Beschreibung

Die Erfindung betrifft ein Profilierungswerkzeug und ein Verfahren zur spangebenden Bearbeitung von Radsätzen schienengebundener Fahrzeuge gemäß dem Oberbegriff der Patentansprüche 6 und 7, bzw. des Patentanspruchs 1 und wie aus US-A-3540103 bekannt Radsätze werden in Zentriermitteln aufgenommen und werden form- oder kraftschlüssig angetrieben. Unter Radsatz wird auch das Einzelrad oder Radreifen und Radkränze verstanden.

Profile für Radreifen an Schienenfahrzeugen sind Gegenstand nationaler Normung. In Deutschland werden z. B. in DIN 5573 Radprofile festgelegt. Die Umfangsfläche solcher Radreifen bzw. Radkränze unterliegt insbesondere ab der Mitte der Spurkranzkuppe bis zur äußeren Radreifenstirnfläche bzw. bis zur Radkranzstirnfläche, Bild 1 in DIN 5573, im Betrieb einem besonderen Verschleiß. Daher müssen solche Radreifen und Radkränze laufend neu profiliert werden, um einen ruhigen Lauf der damit ausgerüsteten Schienenfahrzeuge zu gewährleisten und die Lager- bzw. Drehgestellbelastung der Schienenfahrzeuge sowie auch den Verschleiß der Schienenoberflächen zu reduzieren bzw. minimieren. Dies ist besonders für solche Schienenfahrzeuge notwendig, die im Hochgeschwindigkeitsverkehr eingesetzt werden.

Es ist bekannt, die Profilierung der besagten Radreifen und Radkränze spanabhebend, z. B. im Drehverfahren oder im Fräsverfahren vorzunehmen. Im letztgenannten Fall werden Umfangsfräser verwendet.

Weiterhin werden als Werkzeuge für die Radprofilbearbeitung Messerköpfe oder Profilwalzenfräser verwendet, die das Radprofil teilweise oder ganz gespeichert haben. Maßgebend für die Werkzeugentwicklung ist das US Patent-Nr. 3.540.103. Dabei handelt es sich um ein achsparallel anzuordnentes Fräswerkzeug, daß das Radprofil ganz gespeichert hat. Die Schneidplatten sind in Umfangsrichtung schraubenförmig gestaffelt angebracht.

Bei bekannten Radsatzfräsmaschinen ist die Fräswerkzeugachse parallel zur Radsatzachse angeordnet und das Radprofil wird durch Rundprofilfräsen erzeugt. Mit dem deutschen Aktenzeichen H9870 wurde eine Radfräsmaschine bekannt, bei der man mittels Profilwalzenfräser die Lauffläche und den Spurkranz und mit einem zweiten Support die Stirnflächen des Rades mit Doppelstirnfräser bearbeitet. Beide Fräswerkzeuge sind achsparallel zur Radsatzachse angeordnet.

Nachteilig bei der Anwendung des achsparallelen Umfangsfräsen sind die während der Bearbeitung wirkenden Drehmomente in Umfangsrichtung auf den Radsatz.

Der relativ harte An- und Ausschnitt bei radialer Zustellung sowie die Werkzeugstandzeiten und die Oberflächenqualität sind verbesserungswürdig.

Der Erfindung liegt die Aufgabe zugrunde, ein Profilierungswerkzeug zu entwickeln, daß das Radprofil teilweise gespeichert hat, ein Verfahren womit die Gesamtbearbeitungszeit eines Radprofiles bei guter Wirtschaftlichkeit und optimaler Spanbruch erhalten wird und die Werkzeugstandzeiten und die Schnittbedingungen verbessert werden, gegenüber dem achsparallelen Rundprofilfräsen. Weiterhin soll die unterschiedliche Härte eines zu reprofilierenden Radprofils bei der Werkzeuggestaltung berücksichtigt werden können. Insbesondere soll auch eine hohe Oberflächenqualität und die Erzeugung von Radprofilen ohne Profilverzerrung gewährleistet werden.

Das Bearbeitungsverfahren für die Radsatzprofilierung soll als Rundprofilfräsen bezeichnet werden. Dabei hat der Fräser das Profil des Rades ganz oder teilweise gespeichert. Man unterscheidet achsparalleles und achssenkrechtes Rundprofilfräsen nach der Anordnung der Fräserachse zur Radsatzachse. Bei achssenkrechten Rundprofilfräsen ist die Fräserachse rechtwinklig zur Radsatzachse angeordnet. In einem Einstechvorgang wird das Profilfräswerkzeug auf Sollmaß des Radprofils eingestellt und mittels Rundvorschub die Bearbeitung nach einer Umdrehung des Radreifens beendet.

Erfindungsgemäß wird die Aufgabe nach dem kennzeichnenden Teil des Anspruches 1 dadurch gelöst, daß durch achssenkrechtes Rundprofilfräsen mit einem Stirnprofilfräswerkzeug der Radprofilbereich der Lauffläche mit äußerer Spurkranzfläche bis zur Mitte der Spurkranzkuppe in einem Schnitt erzeugt wird.

Damit sind effektiv Teilbearbeitungen am Radprofil insbesondere an stark verschleißbeanspruchten Teilen der Lauffläche und der äußeren Spurkranzfläche des Radprofils möglich, bzw. in Kombination mit einem weiteren Bearbeitungsverfahren und oder Werkzeug die gesamte Radprofilbearbeitung durchführbar. Die vorhandene Geometrie und demzufolge sich ergebenden unterschiedlichen Abstände der Schneidplatten von der Drehmitte des Werkzeuges, bedingt bei der Bearbeitung des Radprofils unterschiedliche Schnittgeschwindigkeiten, ohne Änderung der technologischen Bearbeitungsparameter des Stirnprofilfräsers, am Radprofil. Dadurch werden vorteilhaft gleichzeitig die Laufflächen des Radprofiles mit einer niedrigeren und Teile des Spurkranzes mit einer höheren Schnittgeschwindigkeit bearbeitet. Demzufolge werden vorteilhaft beispielsweise Hartstellen und stark verfestigte Werkstückoberflächen mit kleineren Schnittgeschwindigkeiten bearbei tet.

Durch das achssenkrechte Rundprofilfräsen werden beim Spanen vorwiegend Druckeigenspannungen, wie das beim Umgangsfräsen der Fall ist, an der Oberfläche erzeugt, die eine hohe Dauerbelastbarkeit und Verschleißfestigkeit der reprofilierten Radoberflächen ermöglichen. Mit der Anordnung der Schneidplatten kann ein höheres Zeitspanvolumen bei der Bearbeitung hinsichtlich der Lauffläche und eines Teils des Spurkranzes gegenüber dem Stand der Technik realisiert werden. Die auftretenden Passivkräfte sind gegenüber dem Umfangsfräsen achsparallel, gering. Es erfolgt auch ein relativ geringer Wärmeeintrag in die Oberflächen des zu profilierenden Rades. In Ausnahmefällen, bei symmetrischen Spurkranz, ist die restliche Profilbearbeitung durch Umsetzen des Fräsers, bei Drehrichtungsänderung des Rades oder Fräsers, möglich.

Nach Anspruch 2 wird vorgeschlagen, daß auch der Radprofilbereich der inneren Spurkranzfläche von der Radreifenstirnfläche bis zur Spurkranzkuppe durch achssenkrechtes Rundprofilfräsen mit einem Stirnprofilfräswerkzeug in einem Schnitt erzeugt wird. Eine Ausgestaltung des Verfahrens wird nach Anspruch 3 vorgeschlagen. Dazu sind jedoch jeweils zwei Stirnprofilfräswerkzeuge pro Rad und mindestens ein Schlitten zur Werkzeugaufnahme an einer Radsatzbearbeitungsmaschine notwendig.

In weiterer Ausgestaltung nach Anpruch 4 wird vorgeschlagen, daß die Bearbeitung mit jeweils den Werkstoffeigenschaften im Radprofilbereich angepaßten Schneidstoffen erfolgt. Dadurch werden die Werkzeugstandzeiten des Stimprofilfräswerkzeuges erhöht. Eine bevorzugte Ausführungsform der Erfindung nach Anspruch 5 wird durch die Anordnung des Stirnprofilfräswerkzeuges bei einer Exzentrizität annähernd e = 0 vorgeschlagen. Damit soll eine möglichst hohe Zerspanungsleistung und gute Oberflächenqualität erreicht werden. Erfindungsgemäß wird die Aufgabe mit einem Profilfräswerkzeug nach Anspruch 6 dadurch gelöst, daß die Ausbildung als Stimprofilfräswerkzeug zum achssenkrechten Rundprofilfräsen, mit einem scheibenförmigen Grundkörper, sowie mit dem jeweiligen Radprofilabschnitt nachgeformten Schneidkanten der an diesem angeordneten Schneidkörper für den Radprofilbereich der Lauffläche und der äußeren Spurkranzfläche, bis zur Mitte der Spurkranzkuppe gespeichert hat, besteht.

Durch die achssenkrechte Anordnung und Gestaltung des Profilfräsers als Stirnprofilfräser, der vorzugsweise den Radprofilbereich Lauffläche und äußeren Spurkranzflanke bis Spurkranzkuppe, durch eine Vielzahl der Radprofilform angepaßten Schneidkanten, gespeichert hat, ist eine effektive Bearbeitung bei sehr hohen Zeitspanvolumen und günstiger Art der Einbringung der Schnittkräfte möglich. Die im Laufflächenbereich angeordneten Schneidkörper sind spiralförmig, gestaffelt und in tangential versetzter Richtung aufgenommen. Vorteilhaft wird mit einmaliger Zustellung auf Sollmaß, bei einer Radsatzumdrehung, profiliert.

Die vorzugsweise Relativstellung zwischen Profilstirnfräser und Radreifen bzw. Radkranz impliziert, daß sich deren Achsen schneiden. Die Werkzeugstandzeit ist bei einem solchen Stirnprofilfräser höher als bei den eingangs genannten, herkömmlicherweise für die Reprofilierung eingesetzten Werkzeugen. Außerdem wird eine bessere Mikrostruktur der reprofilierten Radlaufflächen erzeugt.

Die Erfindung kann sowohl bei der Überflurbearbeitung, wobei die Einrichtung an beliebiger Stelle angebracht werden kann, als auch bei der Unterflurbearbeitung von Radsätzen im Gleich- und Gegenlauf eingesetzt werden.

Nach einer Ausgestaltung der Erfindung durch Anspruch 7, kann durch die Ausbildung als Stirnprofilfräswerkzeug zum achssenkrechten Rundprofilfräsen, mit einem scheibenförmigen Grundkörper, sowie mit dem jeweiligen Radprofilabschnitt nachgeformten Schneidkanten der an diesem angeordneten Schneidkörper für den Radprofilbereich der inneren Spurkranzflanke, von der inneren Radreifenstirnfläche bis zur Mitte der Spurkranzkuppe, die restliche Radprofilbearbeitung anschließend oder gleichzeitig mit einem zweiten Stirnprofilfräswerkzeug erfolgen.

Eine weitere Ausgestaltung des Profilfräswerkzeugs wird nach Anspruch 8 vorgeschlagen, indem der Schneidkörperüberdeckungsgrad so ausgeführt ist, daß jede Schneide als effektive Schneide, nach dem Prinzip des Breitschlichtens, angeordnet ist. Dadurch wird eine hohe Oberflächengüte erzeugt sowie die Gebrauchseigenschaften des Radprofiles verbessert. Nach Anspruch 9 wird vorgeschlagen, daß die Schneidkörper des Laufflächenprofilbereiches in Tangential-Anordnung mit spiralförmiger Gruppierung und die Schneidkörper des Spurkranzprofilbereiches in Radial-Anordnung mit Lücken-Gruppierung am Grundkörper angeordnet sind. Die Schneidkörper können in Kassetten aufgenommen werden. Für den Spurkranzbereich wird vorzugsweise die stehende Schneidkörperanordnung gewählt. Nach Anspruch 10 wird ein Stirnprofilfräswerkzeug vorgeschlagen, daß zehn Schneidkörpergruppen der mit spiraliger Gruppierung angeordneten Schneidkörper in einem Umfangswinkel von 18° vorgesehen sind. Diese Anordnung ist variabel und kann entsprechend der Profilgröße und einzusetzender Schneidkörper verändert werden. Für eine gute Späneabfuhr sind die nach Anspruch 11 vorgesehenen Spankammern eingebracht. Eine weitere vorteilhafte Ausgestaltung der Erfindung nach Anspruch 12, ist dadurch möglich, daß das Stimprofilfräswerkzeug entsprechend ausgewählter Profilbereiche unterschiedliche Schneidengeometrien hinsichtlich des Werkzeug - Spanwinkel y, Freiwinkel α, Einstellwinkel χ und Neigungswinkel λ aufweisen. Dadurch ist es z. B. möglich, im verfestigten Laufflächenbereich mit negativen Span- und Neigungswinkel die Bearbeitung durchzuführen.

Der Erfindungsgegenstand wird beispielhaft anhand der Zeichnungen näher erläutert.

Es zeigen:
- Fig. 1: eine Draufsicht auf die Fräserstirnfläche.
- Fig. 2: einen Teilschnitt entsprechend der Schnittline II-II in Fig. 1 mit gestrichelt eingezeichnetem Profilquerschnitt des Radreifens.
- Fig.3: eine schematische Darstellung bei der dem Stirnprofilfräser zum Einsatz gelangenden Schneidkörper analog Fig. 2 in gruppierter Positionierung.
- Fig. 4: eine Schnittdarstellung entsprechend etwa dem Schnitt A-A in Fig. 5 durch einen an der Stirnfläche des Fräsers angeordneten Schneidkörperhalter.
- Fig. 5: eine vergrößerte Sektor-Draufsicht auf den unteren linken Quadranten der Stirnseite des Profilstirnfräsers nach Fig. 1.
- Fig. 6: eine vergrößerte Querschnittdarstellung ähnlich der Querschnittdarstellung in Fig. 2.
- Fig. 7: die Draufsicht auf unterschiedliche Schneidkörperformen, die am Stirnprofilfräser nach der Erfindung verwandt werden.
- Fig. 8: eine vergrößerte Seitenansicht analog etwa Fig. 3 auf gestaffelt hintereinander angeordnete und dadurch eine hinsichtlich ihrer Wirksamkeit lückenlos durchgehende Schneide bildenden Schneidkörperkette.
- Fig. 9: tangentiale Schneidenanordnung

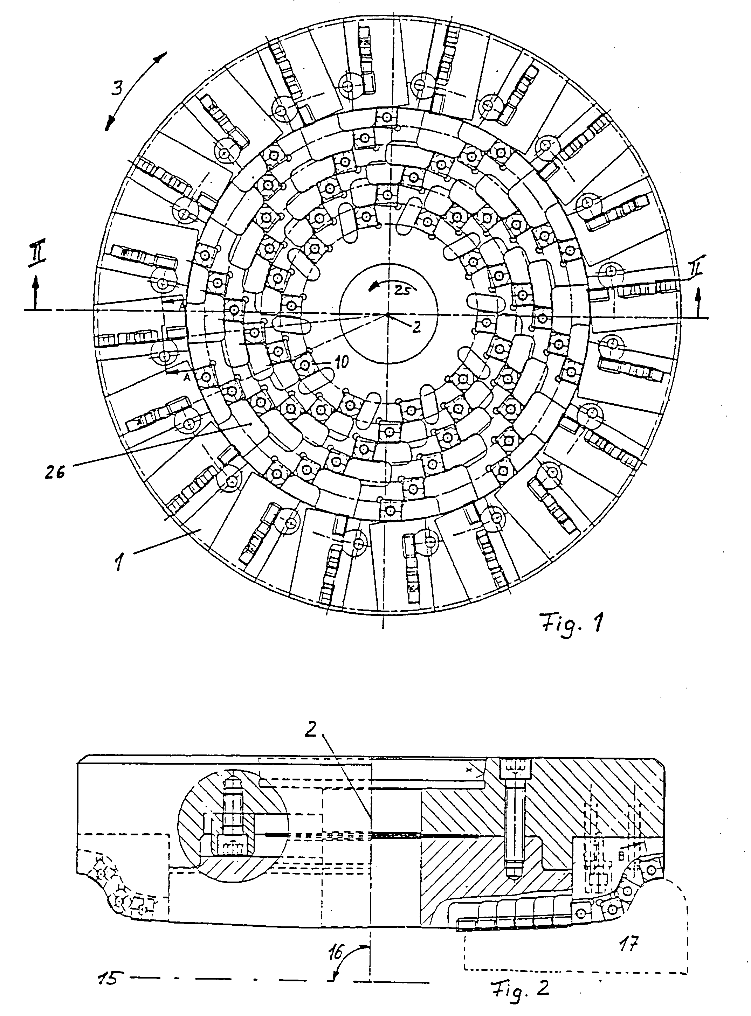

In Fig. 1 wird die Gestaltung eines Stirnprofilfräsers für die Bearbeitung des Radprofilbereiches der Lauffläche mit äußerer Spurkranzfläche dargestellt. Ein derartiges Fräswerkzeug wird in bekannter Weise auf einem mit Werkzeugantrieb ausgestatteten, positionierbaren Werkzeugschlitten einer Radsatzbearbeitungsmaschine angeordnet.

Die Stirnfläche des Stirnprofilfräsers 1 ist ausgehend von der Fräserachse 2 radial nach außen derart konturiert bzw. profiliert, daß seine gleichmäßig in Umfangsrichtung 3 verteilt und im wesentlichen radial wirksam gestaffelt angeordneten Schneidkörper 4-10 bzw. A-G (Fig. 2, 3, 7, 8) mit ihren in Aktivstellung befindlichen Schneiden 11 durch deren gestaffelte Positionierung hintereinander bzw.gegeneinander sowie radial von innen nach außen eine in sich durchgehende, das Negativ des Sollprofils des Radreifens bzw. des Radkranzes 12 bilden, und zwar zwischen dessen Spurkranzkuppe 13 und dem der Radreifenstirnfläche 14 zugewandten Ende.

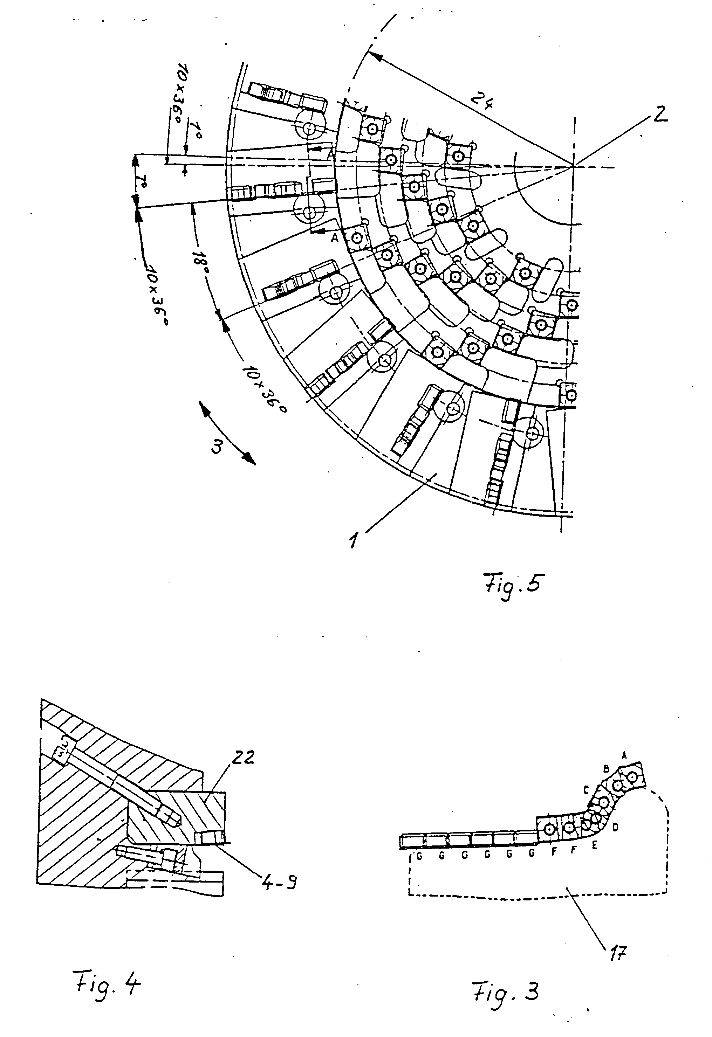

Die Relativstellung des Profilstirnfräsers 1 gegenüber dem Radreifen- bzw. Radkranzprofil 17 beim Fräsvorgang ist aus den Fig. 2 und 3 ersichtlich. In Fig. 2 ist die Lage der Radsatzachse 15 angedeutet. Sie bildet mit der Fräserachse 2 einen rechten Winkel 16. Das Querschnittsprofil von Radreifen bzw. Radkranz, welches in den Fig. 2, 3 und 8 gestrichelt dargestellt ist, trägt die Bezugsziffer 17.

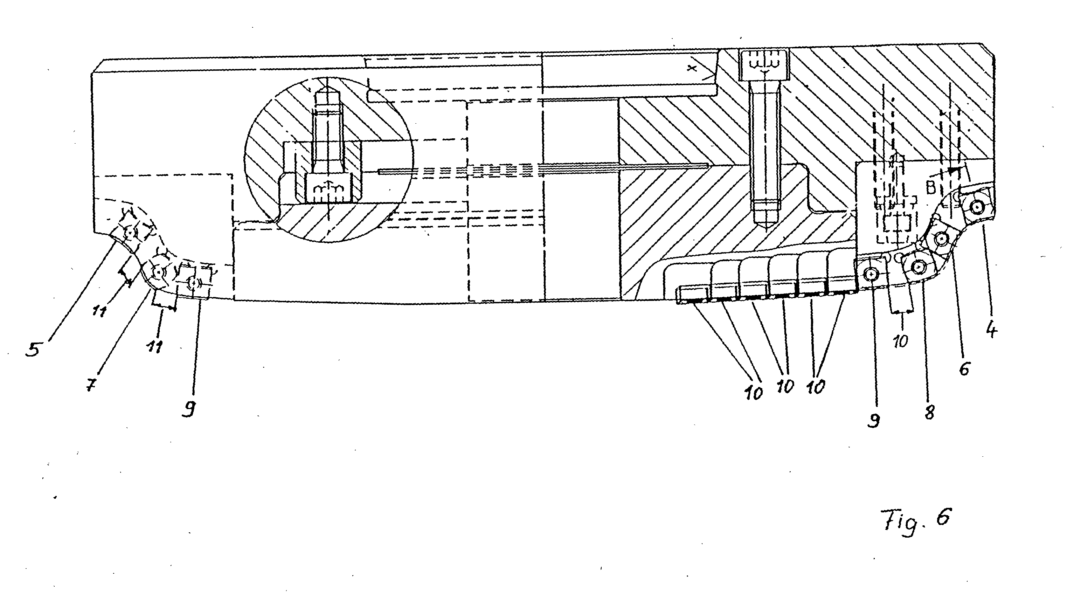

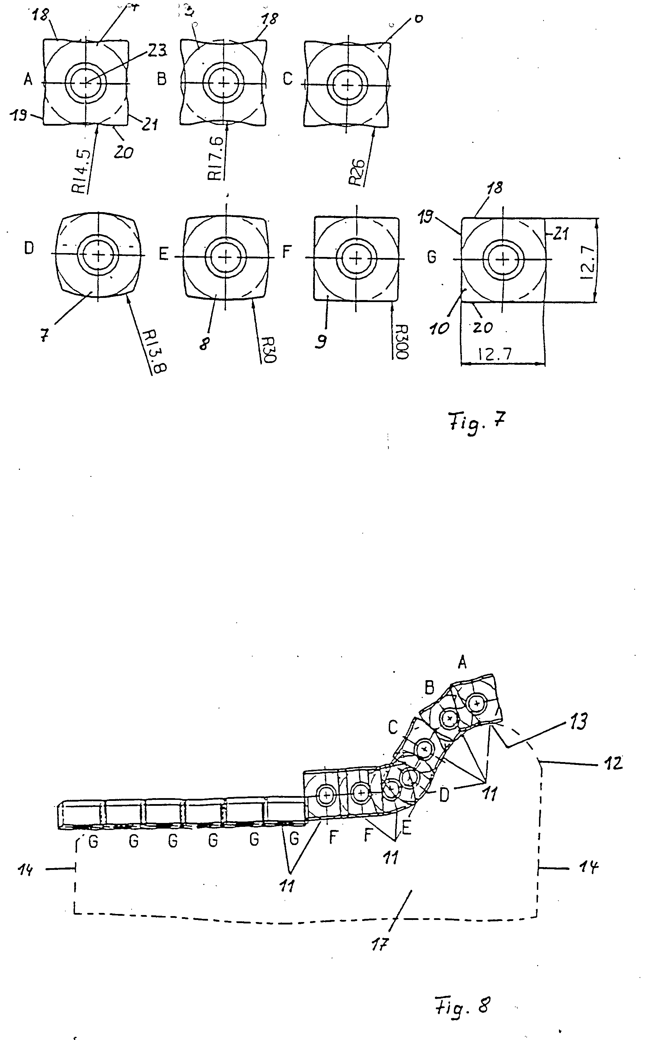

Die Schneidkörper 4-8 =AF stehen aufrecht im Schnitt. Es sind dies mehrschneidige Schneidkörper (Fig. 7) aus einem harten Schneidwerkstoff, z. B. Hartmetall. Sie weisen über ihren Umfang verteilt vier nacheinander in Schnitt- bzw. Aktivstellung überführbare Schneiden 18-21 auf. Die Schneidkanten 18-21 sind entsprechend dem von Ihnen bearbeiteten Profilbereich zwischen Spurkranzkuppe 13 und Radreifenumfang konturiert. Nach dem Verschleiß einer der in Schneidstellung befindlichen Schneidkanten wird der Schneidkörper in seiner Halterung, z. B. einer Kassette 22, um seine lotrecht zur Zeichnungsebene von Fig. 7 verlaufende Lochachse 23 um 90 ° gedreht, so daß die nächste, noch unverschlissene Schneide 19, 20 oder 21 in Schneidposition steht. Diese Art der Verwendung von Wendeschneidkörpern ist prinzipiell bekannt. Nach einem Verschleiß sämtlicher Schneidkanten 18-21 ist der Schneidkörper verbraucht und wird definitiv entfernt bzw. entsorgt. Wie die Draufsicht auf die Stirnfläche des Fräsers 1 zeigt, sind die nebeneinander auf einem Radius positionierten, etwa lotrecht hinsichtlich ihrer Plattenebenen im Schnitt stehenden Schneidkörper 4-9 jeweils zu Auswahlgruppen nebeneinander radial ausgerichtet angeordnet. Die Auswahlgruppen sind gewählt, daß in Radialrichtung zueinander benachbarte Schneikörper 4, 6, 8, 9 bzw. 5, 7, 9 zwischen sich eine Lücke 10 bzw. 11 (Fig. 6) freihalten. Um trotzdem eine durchgehende Profilierung am Radkranzumfang zu gewährleisten, folgt in Umfangsrichtung 3 immer einer Schneidkörpergruppe 4, 6, 8, 9 einer Schneidkörpergruppe 5, 7, 9 und umgekehrt.

Die Schneidkörper 4, 6, 8, 9 der einen Schneidkörpergruppe stehen in Umfangsrichtung auf Lücke gegenüber den Schneidkörpern 5, 7, 9 der anderen Schneidkörpergruppe und umgekehrt. Die in Umfangsrichtung 3 aufeinanderfolgenden Schneidkörpergruppen 4, 6, 8, 9 bzw. 5, 7, 9 stehen in einem Umfangswinkel von 18° zueinander (Fig. 5). Es sind jeweils zehn solcher Schneidkörpergruppen über den Umfang des Stirnprofilfräsers 1 gleichmäßig verteilt vorhanden (Fig. 5). Die Winkelstellung der Schneidkörper entspricht derjenigen bekannter Stirnfräser.

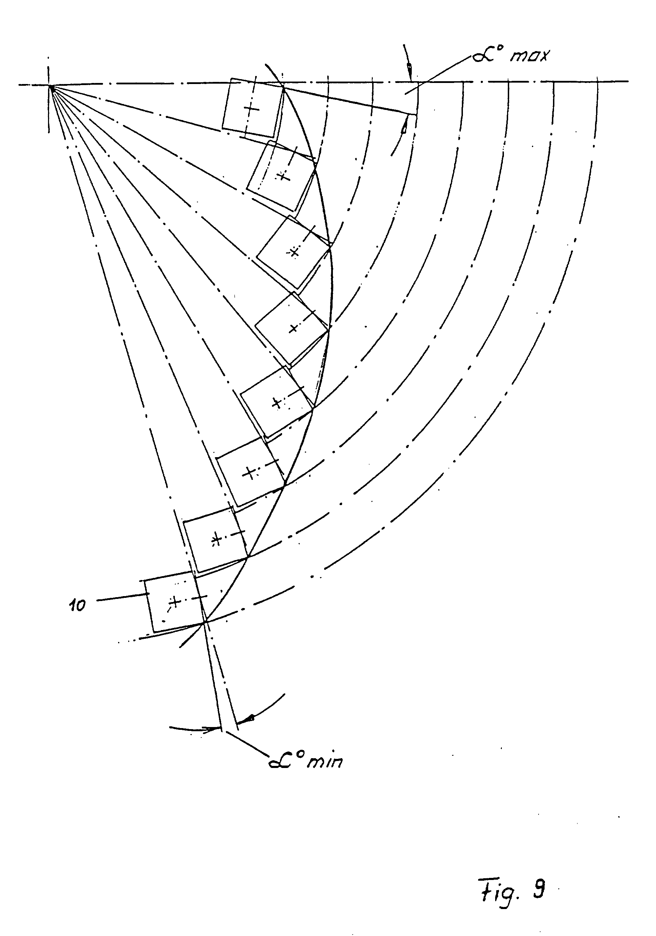

Die Radreifenumfangsfläche, die mehr auf der Seite der Lauffläche 14 liegt, ist beim Geradeauslauf des Schienenfahrzeuges besonders für die Laufruhe verantwortlich. Dieser Bereich bedarf einer besonders feinen Mikrostruktur. Zu seiner Profilierung dienen die liegend im Schnitt stehenden Schneidkörper 10 bzw. G. Durch die liegende Positionierung nehmen die Schneidkörper 10 bzw. G vergleichsweise viel in Umfangsrichtung 3 wirksamen Raum auf der ohnehin flächenmäßig begrenzten Innenscheibe 24 des Fräsers ein. Daher sind über den Umfang verteilt dort nur zehn solche Schneidkörpergruppen von liegend im Schnitt stehenden Schneidkörpern 10 vorhanden. Alle Schneidkörper 10 einer Gruppe liegen in Umfangsrichtung 3 gestaffelt hintereinander derart, daß sich ihre benachbarten Schneidecken in radialer Richtung zur Fräserachse 2 geringfügig überlappen. Der radial innere Schneidkörper 10 einer solchen Schneidkörpergruppe bzw.-kette eilt dem in radialer Richtung zur Fräserachse 2 weiter außen liegenden, benachbarten Schneidkörper 10 derselben Schneidkörperkette in Fräserdrehrichtung 25 voraus. Dadurch insgesamt bildet eine jede aus sich gegenseitige überlappenden Schneidkörpern 10 bzw. G gebildete Schneidkörperkette im Bereich der Oberfläche der Innenscheibe 24 des Fräsers wirkungsmäßig eine lückenlos durchgehende Profilschneide mit einem Negativprofil zu der zu reprofilierenden Umfangsfläche des für die Laufruhe besonders wichtigen, der Lauffläche 14 zugewandten Bereich des Radreifenumfanges. Die Schneidkörperhalter werden entsprechend der Radprofilkontur steigend oder fallend angeordnet. Ein zweiter Profilstirnfräser zur Bearbeitung der inneren Spurkranzflanke, der das Sollprofil dieses Radprofilbereiches gespeichert hat, wurde nicht dargestellt. In Fig. 9 wird die tangentiale Schneidenanordnung für den Laufflächen-Profilbereich dargestellt.

Im übrigen unterscheidet sich der Stimprofilfräser nicht wesentlich bzw. prinzipiell hinsichtlich seines technischen Aufbaus von bekannten Stirnfräsern, deren Schneiden durch Wechsel- bzw. Wendeschneidkörper gebildet sind.

### Bezugszeichenliste

- 1: Stirnprofilfräswerkzeug
- 2: Fräserachse
- 3: Umfangsrichtung
- 4: A Schneidkörper
- 5: B Schneidkörper
- 6: C Schneidkörper
- 7: D Schneidkörper
- 8: E Schneidkörper
- 9: F Schneidkörper
- 10: G Schneidkörper
- 11: Schneide
- 12: Spurkranzflanke, innere
- 13: Spurkranzkuppe
- 14: Lauffläche
- 15: Radsatzachse
- 16: rechter Winkel
- 17: Radkranzprofil
- 18: Schneidkante
- 19: Schneidkante
- 20: Schneidkante
- 21: Schneidkante
- 22: Kassette
- 23: Lochachse
- 24: Innenscheibe
- 25: Fräserdrehrichtung
- 26: Aussparung

## Patentansprüche

1. Verfahren zur spangebenden Bearbeitung von Radsätzen schienengebundener Fahrzeuge durch Rundprofilfräsen mit einem Profilfräswerkzeug, durch dessen Schneidkantenanordnung das Negativ des Soll- Radprofils gespeichert ist, **dadurch gekennzeichnet, daß** durch achssenkrechtes Rundprofilfräsen mit einem Stirnprofilfräswerkzeug (1) der Radprofilbereich der Lauffläche (14) mit äußerer Spurkranzfläche bis zur Mitte der Spurkranzkuppe (13) in einem Schnitt erzeugt wird.

2. Verfahren nach Anspruch 1 **dadurch gekennzeichnet, daß** auch der Radprofilbereich der inneren Spurkranzfläche von der Radreifenstirnfläche bis zur Spurkranzkuppe (13) durch achssenkrechtes Rundprofilfräsen mit einem Stirnprofilfräswerkzeug (1) in einem Schnitt erzeugt wird.

3. Verfahren nach Anspruch 2 **dadurch gekennzeichnet, daß** die Bearbeitung des gesamten Radprofiles gleichzeitig mit zwei Stirnprofilfräswerkzeugen erfolgt.

4. Verfahren nach Anspruch 1, 2 oder 3 **dadurch gekennzeichnet, daß** die Bearbeitung mit jeweils den Werkstoffeigenschaften im Radprofilbereich angepaßten Schneidstoffen erfolgt.

5. Verfahren nach einem der Ansprüche 1 bis 4 **dadurch gekennzeichnet, daß** die Bear beitung bei Anordnung des Stimprofilfräswerkzeuges (1) bei einer Exzentrizität annähernd e = 0 erfolgt.

6. Profilfräswerkzeug zur spangebenden Bearbeitung von Radsätzen schienengebundener Fahrzeuge durch Rundprofilfräsen, insbesondere zur Durchführung des Verfahrens nach einem der Ansprüche 1 bis 5, mit einem Grundkörper mit daran angeordneten Schneidkörpern, wobei durch deren einander in Schnittrichtung sich überlappende Schneidkanten das Negativ des Soll- Radprofils gespeichert ist, **gekennzeichnet, durch** die Ausbildung als Stirnprofilfräswerkzeug (1) zum achssenkrechten Rundprofilfräsen, mit einen scheibenförmigen Grundkörper, sowie mit dem jeweiligen Radprofilabschnitt nachgeformten Schneidkanten der an diesem angeordneten Schneidkörper (4 - 10) für den Radprofilbereich der Lauffläche (14) und der äußeren Spurkranzfläche bis zur Mitte der Spurkranzkuppe (13).

7. Profilfräswerkzeug zur spangebenden Bearbeitung von Radsätzen schienengebundener Fahrzeuge durch Rundprofilfräsen, insbesondere zur Durchführung des Verfahrens nach einem der Ansprüche 2 bis 5, mit einem Grundkörper mit daran angeordneten Schneidkörpern, wobei durch deren einander in Schnittrichtung sich überlappende Schneidkanten das Negativ des Soll-Radprofils gespeichert ist, **gekennzeichnet, durch** die Ausbildung als Stirnprofilfräswerkzeug zum achssenkrechten Rundprofilfräsen, mit einem scheibenförmigen Grundkörper, sowie mit dem jeweiligen Radprofilabschnitt nachgeformten Schneidkanten der an diesem angeordneten Schneidkörper für den Radprofilbereich der inneren Spurkranzflanke, von der inneren Radreifenstirnfläche bis zur Mitte der Spurkranzkuppe (13).

8. Profilfräswerkzeug nach Anspruch 6 oder 7 **dadurch gekennzeichnet, daß** jede Schneide als effektive Schneide, nach dem Prinzip des Breitschlichtens, angeordnet ist.

9. Profilfräswerkzeug nach Anspruch 6 **dadurch gekennzeichnet, daß** die Schneidkörper des Laufflächenprofilbereiches in Tangential-Anordnung mit spiralförmiger Gruppierung und die Schneidkörper (A-F) des Spurkranzprofilbereiches in Radial-Anordnung mit Lücken-Gruppierung, am Grundkörper angeordnet sind.

10. Profilfräswerkzeug nach Anspruch 9 **dadurch gekennzeichnet, daß** zehn Schneidkörpergruppen der mit spiraliger Gruppierung angeordneten Schneidkörper (A-G) in einem Umfangswinkel von 18° vorgesehen sind.

11. Profilfräswerkzeug nach Anspruch 9 oder 10 **dadurch gekennzeichnet, daß** zwischen den Schneidkörpern (A-G) in Bearbeitungsrichtung Spankammern (26) zur störungsfreien Spanabfuhr vorgesehen sind.

12. Profilfräswerkzeug nach einem der Ansprüche 6 bis 11 **dadurch gekennzeichnet, daß** das Stirnprofilfräswerkzeug (1) entsprechend ausgewählter Radprofilbereiche unterschiedliche Schneidgeometrien aufweist.

## Claims

1. Process for stock-removal machining of wheelsets of rail vehicles by round shaping with an end-milling cutter duplicating the negative of the required wheel shape due to the disposition of cutting edges wherein the wheel shape section of running surface (14) with outside flange face to the tip of the flange (13) is produced in one cut by means of axially vertical round shaping with an end-milling cutter (1).

2. Process as recited in Claim 1 wherein the wheel flange section of the inside flange face from wheel surface to the tip of the flange (13) is also produced in one cut by means of axially vertical round shaping with an end-milling cutter. (1).

3. Process as recited in Claim 2 wherein the machining process of the total wheel shape is carried out simultaneously by means of two end-milling cutters.

4. Process as recited in Clains 1, 2 or 3 wherein the machining process is carried out by means of cutting materials adapted to the respective material characteristics in the wheel shape section.

5. Process as recited in one of the Claims 1 through 4 wherein the machining process is carried out with end-milling cutter (1) disposed at an eccentricity of approximately e = 0.

6. End-milling cutter for stock-removal machining of rail-vehicle wheelsets by means of round shaping, in particular, for accomplishment of process according to one of the Claims 1 through 5 comprising a body with cutters disposed thereto duplicating the negative of required wheel shape by cutting edges overlapping one another in cutting direction wherein the end-milling cutter (1) is designed for axially vertical round shaping with a disc-shaped body as well as with cutting edges duplicating the respective wheel shape section of the cutters (4 - 10) attached thereto for the wheel shape area of running surface (14) and the outside flange face to the tip of the flange (13).

7. End-milling cutter for stock-removal machining of rail-vehicle wheelsets by means of round shaping, in particular, for accomplishment of process according to one of the Claims 2 through 5 comprising a body with cutters disposed thereto duplicating the negative of required wheel shape by cutting edges overlapping one another in cutting direction wherein the end-milling cutter is designed for axialy vertical round shaping with a disc-shaped body as well as with cutting edges duplicating the respective wheel shape section of the cutters attached thereto for the wheel shape area of the inside flange face from the insidw wheel surface to the tip of the flange (13).

8. End-milling cutter as recited in Claims 6 or 7 wherein each cutting edge is disposed as effective edge following the broad-finishing principle.

9. End-milling cutter as recited in Claim 6 wherein the cutters of the shape section of running surface are disposed tangentially in spiral arrangement and the cutters (A-F) of the flange shape section radially in gap arrangement at the body.

10. End-milling cutter as recited in Claim 9 wherein ten cutter groups of the cutters (A-G) disposed in spiral arrangement are provided at a circumferential angle of 18°.

11. End-milling cutter as recited in Claims 9 or 10 wherein chip flutes (26) are provided between the cutters (A-G) in cutting direction to ensure troublefree chip disposal.

12. End-milling cutter as recited in one of the Claims 6 through 11 wherein the end-milling cutter (1) has different edge geometries according to the wheel shape sections selected.

## Revendications

1. Procédé d'usinage d'essieux montés de chemin de fer par fraisage de profils ronds au moyen d'une fraise à reprofiler dont les tranchants sont disposés de telle façon qu'ils représentent le négatif du profil désiré de la roue, **caractérisé en ce que** la zone de profil de roue de la surface de roulement (14) avec la surface extérieure de boudin jusqu'au milieu du sommet de boudin (13) est usinée par fraisage de profils ronds vertical à l'axe au moyen d'une fraise de reprofilage frontal (1) en une seule passe.

2. Procédé selon la revendication 1, **caractérisé en ce que** c'est aussi la zone de profil de roue de la surface intérieure de boudin à partir de la face du bandage de roue jusqu'au sommet de boudin (13) qui est usinée par fraisage de profils ronds vertical à l'axe au moyen d'une fraise de reprofilage frontal (1) en une seule passe.

3. Procédé selon la revendication 2, **caractérisé en ce que** l'usinage du profil complet de roue est effectué par deux fraises de reprofilage frontal à la fois.

4. Procédé selon la revendication 1, 2 ou 3, **caractérisé en ce que** l'usinage est effectué à une matière de coupe conforme aux propriétés de la matière de la zone de profil de roue.

5. Procédé selon l'une des revendications 1 à 4, **caractérisé en ce que** l'usinage est effectué à une excentricité d'à peu près e = 0 pour le positionnement de la fraise de reprofilage frontal (1).

6. Fraise à reprofiler pour l'usinage d'essieux montés de chemin de fer par fraisage de profils ronds, surtout pour la mise en oeuvre du procédé selon l'une des revendications 1 à 5, comportant un corps de base sur lequel sont disposés les corps de coupe dont les tranchants chevauchant en direction de coupe représentent le négatif du profil désiré de roue, **caractérisée par** sa réalisation en fraise de reprofilage frontal (1) pour le fraisage de profils ronds vertical à l'axe, avec un corps de base en disque ainsi qu'avec des tranchants conformes à la zone respective de profil de roue des corps de coupe (4-10) disposés sur celui-ci, pour l'usinage de la zone de profil de roue de la surface de roulement (14) et de la surface extérieure de boudin jusqu'au milieu du sommet de boudin (13).

7. Fraise à reprofiler pour l'usinage d'essieux montés de chemin de fer par fraisage de profils ronds, surtout pour la mise en oeuvre du procédé selon l'une des revendications 2 à 5, comportant un corps de base sur lequel sont disposés les corps de coupe dont les tranchants chevauchant en direction de coupe représentent le négatif du profil désiré de roue, **caractérisée par** sa réalisation en fraise de reprofilage frontal pour le fraisage de profils ronds vertical à l'axe, avec un corps de base en disque ainsi qu'avec des tranchants conformes à la zone respective de profil de roue des corps de coupe disposés sur celui-ci, pour l'usinage de la zone de profil de roue du flanc intérieur du boudin, à partir de la face intérieure du bandage de roue jusqu'au milieu du sommet de boudin (13).

8. Fraise à reprofiler selon la revendication 6 ou 7, **caractérisée en ce que** chaque tranchant est disposé comme tranchant effectif, d'après le principe du finissage au large.

9. Fraise à reprofiler selon la revendication 6, **caractérisée en ce que** les corps de coupe de la zone de profil de la surface de roulement sont disposés tangentiellement en groupes en spirale et que les corps de coupe (A-F) de la zone de profil du boudin sont disposés radialement en groupes à vides, sur le corps de base.

10. Fraise à reprofiler selon la revendication 9, **caractérisée en ce qu'**il y a dix groupes des corps de coupe disposés en groupes en spirale (A-G) à un angle périphérique de 18°.

11. Fraise à reprofiler selon la revendication 9 ou 10, **caractérisée en ce qu'**il y a entre les corps de coupe (A-G) dans le sens d'usinage des logements de copeaux (26) destinés à évacuer les copeaux sans engendrer des défauts.

12. Fraise à reprofiler selon l'une des revendications 6 à 11, **caractérisée en ce que** la fraise de reprofilage frontal (1) présente des géométries de coupe différentes en fonction de zones de profil de roue choisies.
